# EUROPÄISCHE PATENTANMELDUNG

(11) **EP 2 068 222 A2**
(43) Veröffentlichungstag der Anmeldung: **10.06.2009**
(21) Anmeldenummer: 08018272.8
(22) Anmeldetag: 18.10.2008
(51) Int. Cl.: G05D 16/10

(54) **Druckminderer**

(30) Priorität: 07.12.2007 DE 102007059315
(71) Anmelder: Honeywell Technologies Sarl, 1110 Morges (CH)
(72) Erfinder: Pfeiffer, Uwe, 74834 Elztal (DE)
(74) Vertreter: Graefe, Jörg

(57) **Zusammenfassung**

Die vorliegende Erfindung betrifft einen Druckminderer, insbesondere für Flüssigkeitsleitungen mit einem Verschlusskolben (70,110) als Absperrorgan, mit einem Ausgleichskolben (20a, 190) als Mittel zum Druckausgleich, mit einem ein- oder mehrteiligen Verbindungsmittel (20b, 90, 200), über welches der Verschlusskolben (70, 110) und der Ausgleichskolben (20a, 190) starr miteinander verbunden sind, mit einem Ventilsitz, mit dem der Verschlusskolben (70, 110) eine Durchströmungsöffnung bestimmt, gegen den der Verschlusskolben (70, 110) bei geschlossenem Ventil abdichtet und welchen das Verbindungsmittel (20b, 90, 200) durchgreift, und mit Führungsmittel (20c, 210), die mit dem Verbindungsmittel mittelbar oder unmittelbar starr verbunden sind und in jeder Betriebsstellung einer Anordnung zumindest aus Ausgleichskolben (20a, 190), Verbindungsmittel (20b, 90, 200) und Verschlusskolben (70, 110) dieselbe führen, wobei die Führungsmittel (20c, 210) im Bereich des Ventilsitzes zwischen dem Verschlusskolben (70, 110) und dem Ausgleichskolben (20a, 190) angeordnet sind.

## Beschreibung

Die vorliegende Erfindung betrifft einen Druckminderer, insbesondere für Flüssigkeitsleitungen, zum Beispiel Wasserleitungen, mit einem Verschlusskolben als Absperrorgan, einem Ausgleichskolben als Mittel zum Druckausgleich, einem ein- oder mehrteiligen Verbindungsmittel, über welches der Verschlusskolben und der Ausgleichskolben starr miteinander verbunden sind, mit einem Ventilsitz, der zusammen mit dem Verschlusskolben eine Durchströmungsöffnung bestimmt, gegen den der Verschlusskolben bei geschlossenem Ventil abdichtet und welchen das Verbindungsmittel zumindest in einem geöffneten Zustand des Druckminderers durchgreift, und mit Führungsmittel, die mit dem Verbindungsmittel mittelbar oder unmittelbar verbunden sind und die in jeder Betriebsstellung einer Anordnung zumindest aus Ausgleichskolben, Verbindungsmittel und Verschlusskolben dieselbe führen.

Aus der Druckschrift mit der Veröffentlichungsnummer DE 195 39 239 A1 ist ein Druckminderer mit den vorstehenden Merkmalen bekannt. Dieser Druckminderer ist sehr komplex aufgebaut. Er weist neben einem Einlaufstutzen und einem Auslaufstutzen zwei weitere Stutzen auf, welche zur Aufnahme der für die Druckregelung notwendigen Teile eingesetzt sind. Der Druckminderer hat eine im Verhältnis zu anderen Armaturen große Bauhöhe. Außerdem ist ein besonderes Gehäuse für den Druckminderer notwendig.

Die Anmelderin hat daher einen weiteren Druckminderer auf den Markt gebracht, der als Typ "D05F" bekannt geworden ist. Der Druckminderer vom Typ "D05F" ist insgesamt kompakter ausgeführt. Neben dem Einlaufstutzen und dem Auslaufstutzen ist lediglich ein weiterer Stutzen vorgesehen, in welchem die für die Regelung des Drucks notwendigen Bauteile des Druckminderers eingesetzt sind. Das Gehäuse kann, sofern andere Bauteile in das Gehäuse eingesetzt werden, auch für andere Armaturen verwendet werden. Der Druckminderer vom Typ "D05F" weist die meisten der eingangs genannten Merkmale auf. Zur Führung der Anordnung aus Ausgleichskolben, Verbindungsmittel und Verschlusskolben ist ein Trichter als Führungsmittel vorgesehen, welcher im Bereich des Ausgleichskolbens fest mit dem Gehäuse verbunden ist und sich in Richtung zum Verschlusskolben bzw. Ventilsitz erstreckt. Der Trichter wird von dem Verbindungsmittel durchgriffen. Das freie Ende des Trichters liegt an dem Verbindungsmittel an und führt dieses. Der Trichter dient somit als Führungsmittel für die Anordnung aus dem Ausgleichskolben, dem Verbindungsmittel und dem Verschlusskolben. Die Führung ist grundsätzlich ausreichend, um eine zuverlässige Funktion des Druckminderers vom Typ "D05F" zu gewährleisten. Allerdings muss der Trichter dazu eine ausreichende Steifigkeit haben, um die Anordnung aus dem Ausgleichskolben, dem Verbindungsmittel und dem Verschlusskolben auch bei einer starken Durchströmung und starken, auf die Anordnung wirkenden Kräfte zu halten.

Der Aufgabe liegt vor dem Hintergrund des Standes der Technik die Aufgabe zugrunde, einen einfachen und kompakten Druckminderer vorzuschlagen, welcher eine einfache Möglichkeit für die Führung der Anordnung aus dem Verschlusskolben, dem Ausgleichskolben und dem Verbindungsmittel hat.

Diese Aufgabe wird erfindungsgemäß dadurch gelöst, dass die Führungsmittel im Bereich des Ventilsitzes zwischen dem Verschlusskolben und dem Ausgleichskolben angeordnet sind.

Dadurch, dass die Führungsmittel erfindungsgemäß im Bereich des Ventilsitzes zwischen dem Verschlusskolben und dem Ausgleichskolben angeordnet sind, ist einerseits eine optimale Führung der Anordnung aus dem Ausgleichskolben, dem Verbindungsmittel und dem Verschlusskolben und andererseits eine kompakte Bauweise des Druckminderers möglich. Eine Führung der Anordnung durch Führungsmittel, die bezogen auf den Ausgleichskolben jenseits des Verschlusskolbens angeordnet sind, ist nicht notwendig. Dadurch ist eine kompakte Bauart möglich. Außerdem wird die Anordnung im Bereich Ihrer jeweiligen Enden geführt, so dass Drehmomente, die auf die Anordnung wirken, wirksam abgeleitet werden können.

Gemäß der Erfindung können die Führungsmittel radial vom Verbindungsmittel auskragende Flügel sein.

In einer geöffneten Betriebsstellung des Druckminderers durchgreifen die Führungsmittel den Ventilsitz und sind dabei vorzugsweise durch den Ventilsitz oder einen unmittelbar an den Ventilsitz angrenzenden Bereich geführt, an dem sie verschiebbar anliegen.

Der Ausgleichskolben, Teile des Verbindungsmittel und die Führungsmittel können als ein Teil, vorzugsweise als ein Kunststoffteil ausgebildet sein. Das Kunststoffteil kann ein Kunststoffspritzgussteil sein.

Das Verbindungsmittel eines erfindungsgemäßen Druckminderers kann eine Spindel aufweisen, die in den Ausgleichskolben und den Verschlusskolben eingeschraubt ist. Das Verbindungsmittel kann ferner eine Schraube umfassen, mit welchem der Verschlusskolben an dem Teil angeschraubt ist.

Die Führungsmittel sind vorzugsweise zwischen dem Verschlusskolben und der Spindel eingespannt.

Ein erfindungsgemäßer Druckminderer kann eine Hülse aufweisen, in welcher die Anordnung aus dem Verschlusskolben, den Führungsmitteln, dem Verbindungsmittel und Ausgleichskolben verschiebbar angeordnet ist. Die Hülse kann aus Kunststoff hergestellt sein.

An einem ersten Ende der Hülse kann der Ventilsitz ausgebildet sein, mit welchem der Verschlusskolben zusammenwirkt, um die Durchströmung durch den Druckminderer und damit den Hinterdruck einzustellen.

Die Führungsmittel können bei einem erfindungsgemäßen Druckminderer in einem an das erste Ende angrenzenden Bereich einer Innenwand der Hülse geführt anliegen. Ferner kann der Ausgleichskolben in einem an ein zweites Ende der Hülse angrenzenden zweiten Bereich der Innenwand der Hülse geführt anliegen. Damit kann die Anordnung aus dem Verschlusskolben, den Führungsmitteln, dem Verbindungsmittel und dem Ausgleichskolben an ihren Enden durch die Hülse geführt sein.

Der erste Bereich oder der Ventilsitz einerseits und der zweite Bereich der Hülse haben vorzugsweise eine gleichen Durchmesser. Damit ist es möglich, in einen im statischen Zustand, d. h. bei geschlossenem Druckminderer eine druckausgeglichene Vorrichtung zu erhalten. Im statischen Zustand heben sich die aufgrund des Vordrucks auf die Anordnung wirkenden Kräfte gegenseitig auf, so dass ausschließlich die Kräfte des Hinterdrucks in Schließrichtung und Kräfte einer Feder in Öffnungsrichtung auf die Anordnung wirken.

Die Wand der Hülse kann in einem dritten Bereich der Wand zwischen dem ersten und dem zweiten Bereich Durchtrittsöffnungen aufweisen, durch welche die Flüssigkeit im geöffneten Zustand des Druckminderers hindurchströmt.

Ein erfindungsgemäßer Druckminderer weist vorteilhaft ein Gehäuse auf, in welchem die Hülse sowie die Anordnung aus dem Verschlusskolben, den Führungsmitteln, dem Verbindungsmittel und dem Ausgleichskolben angeordnet ist.

Die Anordnung aus dem Verschlusskolben, den Führungsmitteln, dem Verbindungsmittel und dem Ausgleichskolben kann mittels der bereits erwähnten Feder in eine geöffnete Betriebsstellung gedrückt werden. Bei einen ausreichend hohen Hinterdruck, sind die aufgrund des Hinterdrucks auf die Anordnung wirkenden Kräfte der Federkraft entgegengerichtet und drücken die Anordnung, und insbesondere den Verschlusskolben gegen den Ventilsitz in einen geschlossenen Zustand.

Die Vorspannung der Feder kann einstellbar sein, um dadurch den Hinterdruck einzustellen, bei welchem der Druckminderer schließt.

In einer besonderen Ausführung kann der Druckminderer ein Mittel zum Abweisen von Schwebstoffen aufweisen, welches zustromseitig oder einlaufseitig vor dem Ausgleichskolben angeordnet ist. Das Mittel zum Abweisen der Schwebstoffe kann ein trichterförmiger Schirm sein, der von dem Verbindungsmittel durchgriffen wird. An dem Schirm können Düsen vorgesehen sein, die ein Heraussaugen von Schwebstoffen aus dem Bereich vor dem Ausgleichskolben bewirken. Der Schirm kann mit seinem Rand in eine Nut auf der Innenseite der Hülse eingeklipst sein.

Zwei Ausführungsbeispiele für erfindungsgemäße Druckminderer sind anhand der Zeichnungen näher beschrieben. Darin zeigen
- Fig. 1: einen Längsschnitt durch ein erstes Ausführungsbeispiel,

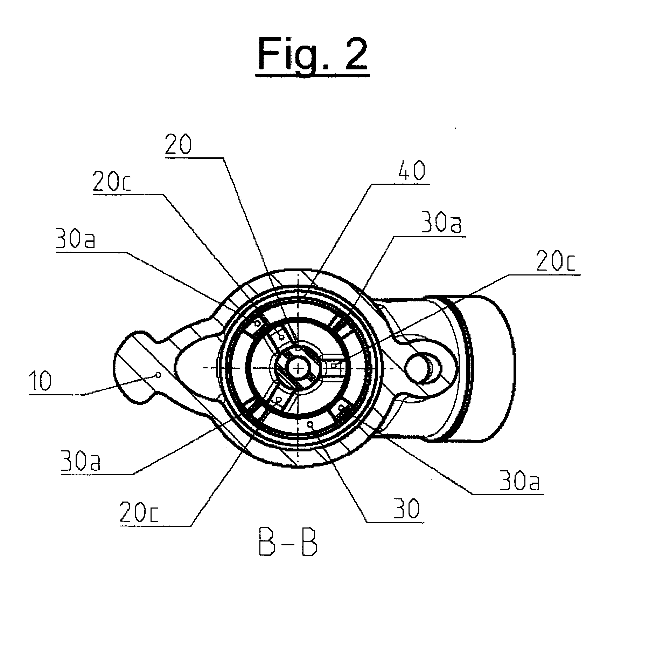

- Fig. 2: einen Querschnitt durch das erste Ausführungsbeispiel, gemäß der Linie B-B in Fig. 1,
- Fig. 3: eine Seitenansicht eines zweiten Ausführungsbeispiels,
- Fig. 4: eine perspektivische Darstellung des zweiten Ausführungsbeispiels zum Teil geschnitten,
- Fig. 5: einen Längsschnitt gemäß der Linie A-A in Fig. 6 durch das zweite Ausführungsbeispiel und
- Fig. 6: eine Ansicht des zweiten Ausführungsbeispiels von oben mit zum Teil entfernten Einzelteilen.

Das erste Ausführungsbeispiel für einen erfindungsgemäßen Druckminderer weist ein Gehäuse 10 auf, welches ein Schrägsitzgehäuse mit einem einlaufseitigen Anschlussstutzen 10a und einem auslaufseitigen Anschlussstutzen 10b ist. Am auslaufseitigen Anschlussstutzen 10b ist ein Anschluss für ein Manometer vorgesehen, der mit einem Deckel 80 verschlossen ist. Zwischen dem Deckel 80 und dem Gehäuse 10 ist eine Dichtung 130 eingesetzt.

In das Gehäuse 10, genauer gesagt in ein Einsatzstutzen 10c des Gehäuses 10 ist ein Ventileinsatz eingesetzt, der aus den mit den Bezugszeichen 20 bis 70, 90 bis 120 und 140 bis 160 bezeichneten Teilen zusammengesetzt ist.

Der Ventileinsatz umfasst zunächst eine Hülse 30. Die Hülse 30 weist an einem ersten Ende einen spitz zulaufenden Rand auf, der einen Ventilsitz des Druckminderers bildet. Dieser Ventilsitz greift in eine Öffnung im Strömungsweg vom Einlaufstutzen 10a zum Auslaufstutzen 10b ein. Die Hülse 30 stützt sich über einen Absatz im Bereich der Öffnung an dem Gehäuse 10 ab und ist in diesem Bereich über eine Dichtung 160 gegenüber dem Gehäuse abgedichtet.

An einem zweiten, dem ersten Ende gegenüberliegenden Ende der Hülse 30 ist ein umlaufender Kragen ausgebildet, mit dem sich die Hülse in dem Einsatzstutzen 10c abstützt, wobei zwischen der Hülse 30 und dem Gehäuse 10 im Bereich des Kragens eine Dichtung 140 eingesetzt ist. Die Hülse 30 hat zwischen dem ersten, an das erste Ende angrenzenden Bereich und dem zweiten an das zweite Ende angrenzende Bereich einen mittleren, dritten Bereich, in welchem Längsschlitze vorgesehen sind, die sich parallel zur Längsachse der Hülse erstrecken und die durch den ersten Bereich und den zweiten Bereich verbindender Stege 30a begrenzt werden. Durch diese Längsschlitze ist es möglich, dass eine Flüssigkeit aus dem Einlaufstutzen 10a in das Innere der Hülse 30 eindringt und diese in Richtung des ersten Endes wieder verlassen kann, um zum Auslaufstutzen 10b des Gehäuses 10 zu gelangen.

In den dem mittleren Bereich der Hülse 30 umgebenden Bereich des Gehäuses ist eine Ringnut eingefräst, so dass die über den Einlaufstutzen 10a zulaufende Flüssigkeit allseitig die Hülse 30 umströmen und durch die Längsschlitze in die Hülse 30 eindringen kann.

Die Längsschlitze in der Hülse 30 können von einem ebenfalls hülsenförmig oder hohlzylindrisch ausgebildeten Sieb 40 abgedeckt werden, welches verhindert, dass größere Partikel den Druckminderer durchströmen.

Der Innendurchmesser des zweiten Bereichs der Hülse 30 ist genauso groß wie der Innendurchmesser der Hülse 30 im Bereich des Ventilsitzes. Dieses ermöglicht eine Ausbildung des Druckminderers der im statischen Zustand, d. h. bei fehlender Durchströmung druckausgeglichen ist und somit unabhängig vom Vordruck und von Druckschwankungen auf der Vordruckseite arbeitet, was noch näher erläutert werden wird.

In der Hülse 30 ist eine Anordnung verschiebbar eingesetzt, die sich aus einem Kunststoffteil 20, einer Schraube 90, einem Teller 70, einer Dichtungsscheibe 110 und einer Dichtung 150 zusammensetzt. Die Teile dieser Anordnung sind starr miteinander verbunden.

Das Kunststoffteil 20 erstreckt sich fast über die gesamte Länge der Hülse 30. Im ersten Bereich der Hülse 30 liegt das Kunststoffteil 20 mit Flügeln 20c an der inneren Wandung der Hülse 30 an. Am gegenüberliegenden Ende des Kunststoffteils 20 ist dagegen ein Kolben 20a ausgebildet, der unter Zwischenschaltung der Dichtung 150 abgedichtet an der inneren Wand im zweiten Bereich der Hülse 30 anliegt. Die Flügel 20c, die sich radial von einem hohlzylindrischen Abschnitt 20b des Kunststoffteils 20 erstrecken, sind über diesen hohlzylindrischen Abschnitt 20b fest mit dem Kolben 20a verbunden. Das Kunststoffteil 20 ist durch den Kolben 20a und die Flügel 20c in der Hülse 30 geführt.

Der Kolben 20a des Kunststoffteils 20 bildet einen Ausgleichskolben, dessen weitere Funktion noch näher erläutert wird. Der hohlzylindrische Abschnitt 20b bildet ein Teil eines Verbindungsmittel, welches den Ausgleichskolben 20a mit den Flügeln 20c verbindet, die Führungsmittel 20c bilden.

Als weiteres Teil des Verbindungsmittel ist die Schraube 90 vorgesehen, welche in den hohlzylindrischen Abschnitt eingeschraubt ist und den Teller 70 und die Dichtungsscheibe 110 mit dem Kunststoffteil 20 verspannt.

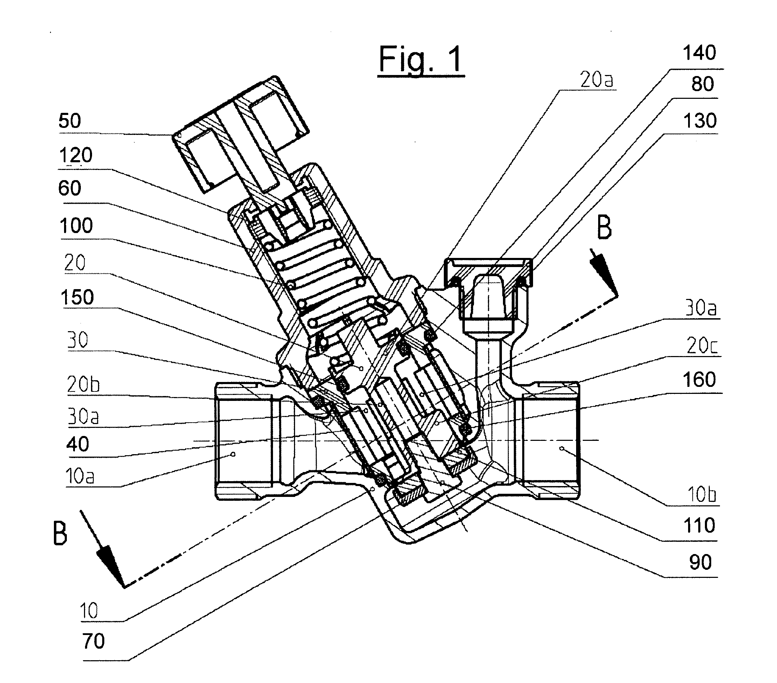

Die Dichtungsscheibe 110 und der Teller 70 bilden zusammen einen Verschlusskolben 20, 110 des Druckminderers. Der Verschlusskolben 70, 110 ist mittels der Schraube 90 und dem hohlzylindrischen Abschnitt 20b, die das Verbindungsmittel bilden, fest mit dem Ausgleichskolben 20a verbunden. Die Dichtungsscheibe 110 hat einen Durchmesser, der größer ist als der Durchmesser der Hülse 30 im Bereich des Ventilsitzes, so dass, sofern die Dichtungsscheibe 110 - und somit der Verschlusskolben 70, 110 - am Ventilsitz anliegt, eine Durchströmung des Druckminderers verhindert ist. In dieser Stellung ist der Druckminderer in der Figur 1 dargestellt.

Wird dagegen die gesamte Anordnung 20, 90, 70, 110 verschoben und entfernt sich dadurch der Verschlusskolben 70, 110 vom Ventilsitz, öffnet sich der Druckminderer und eine Durchströmung vom Einlaufstutzen 10a zum Auslaufstutzen 10b ist möglich.

Der Druck zum Öffnen des Druckminderers wird in der Regel durch eine Druckfeder 100 aufgebracht, die sich auf dem Ausgleichskolben 20a abstützt.

Die Hülse 30 ist in das Gehäuse 10 des Druckminderers eingesteckt und wird durch eine Kappe 60 in dem Gehäuse gehalten. Die Kappe 60 weist dazu in einem Abschnitt ein Außengewinde auf, welches mit einem entsprechenden Innengewinde im Einsatzstutzen 10c des Gehäuses 10 eingeschraubt ist. Die Kappe 60 nimmt die Druckfeder 100 auf. Die Kappe 60 hat ein Innengewinde, in welches ein Gewindestück 120 eingeschraubt ist. Auf diesem Gewindestück 120 stützt sich die Druckfeder ihrem dem Ausgleichskolben 20a gegenüberliegenden Ende ab.

Das Gewindestück 120 ist mit einem Knebel 50 fest verbunden, der eine stirnseitige Öffnung der Kappe 60 durchgreift. Durch ein Verdrehen des Knebels 50 kann der Abstand zwischen dem Gewindestück 120 und dem Ausgleichskolben 20a verändert werden, wodurch sich die Vorspannung der Druckfeder 100 ändern lässt.

Bei geschlossenem Druckminderer liegt die Dichtscheibe 110 am Ventilsitz an. Die freie Fläche der Dichtscheibe 110 und somit des Verschlusskolbens 70, 110 ist dem Vordruck ausgesetzt. Die dem Verschlusskolben 70 zugewandte Fläche des Ausgleichskolbens 20a ist ebenso dem Vordruck ausgesetzt. Aufgrund des gleichen Durchmessers der Hülse 30 im Bereich des Ventilsitzes und im zweiten Bereich, d. h. im Bereich des Ausgleichskolbens 20a sind die aufgrund des Vordrucks auf die Anordnung aus dem Kunststoffteil 20, der Schraube 90, dem Teller 70 und der Dichtscheibe 110 wirkenden Kräfte gleich groß. Sie haben jedoch unterschiedliche, nämlich entgegengesetzte Kraftrichtungen. Die Kräfte heben sich somit in der Wirkung auf und der Vordruck übt in der Summe keine Kraft auf die Anordnung 20, 90, 70, 110 aus. Der Druckminderer ist somit im geschlossenen Zustand vom Vordruck unabhängig.

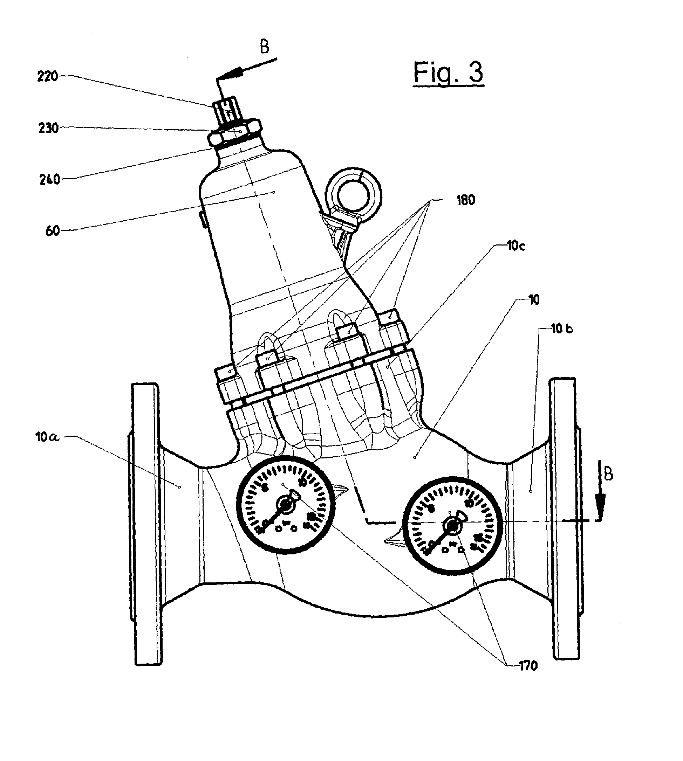

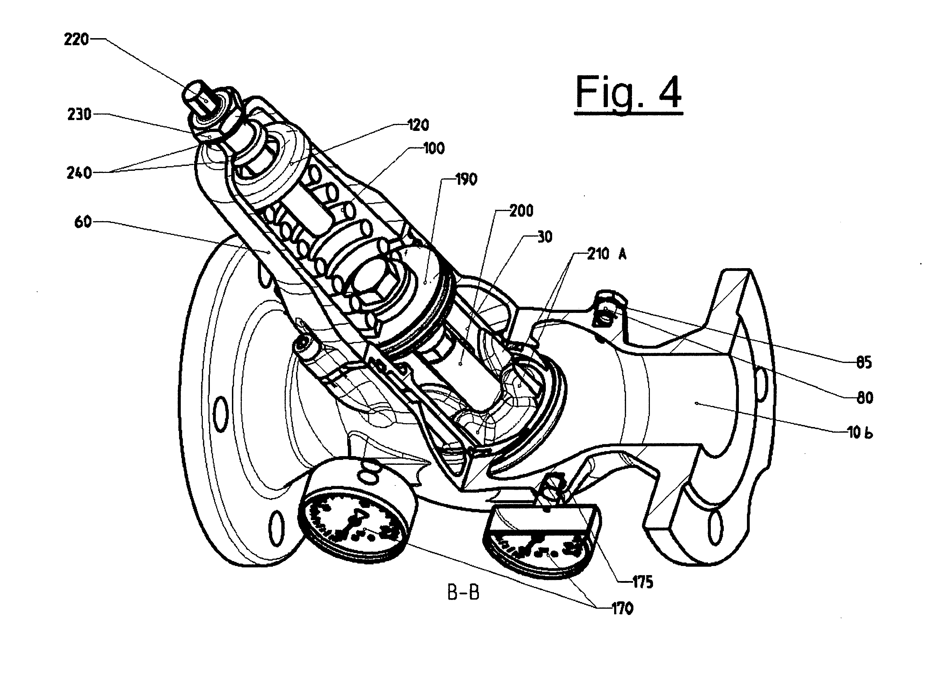

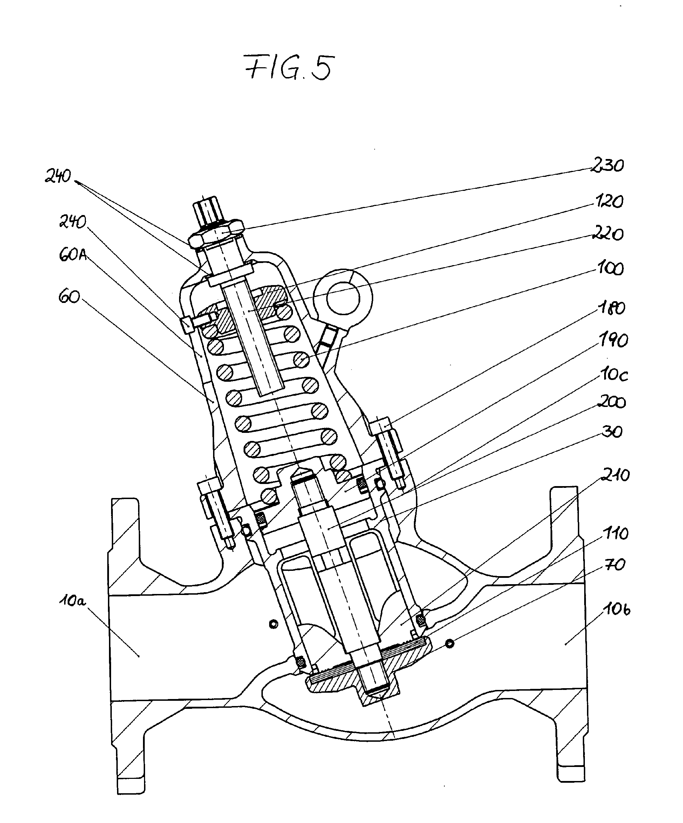

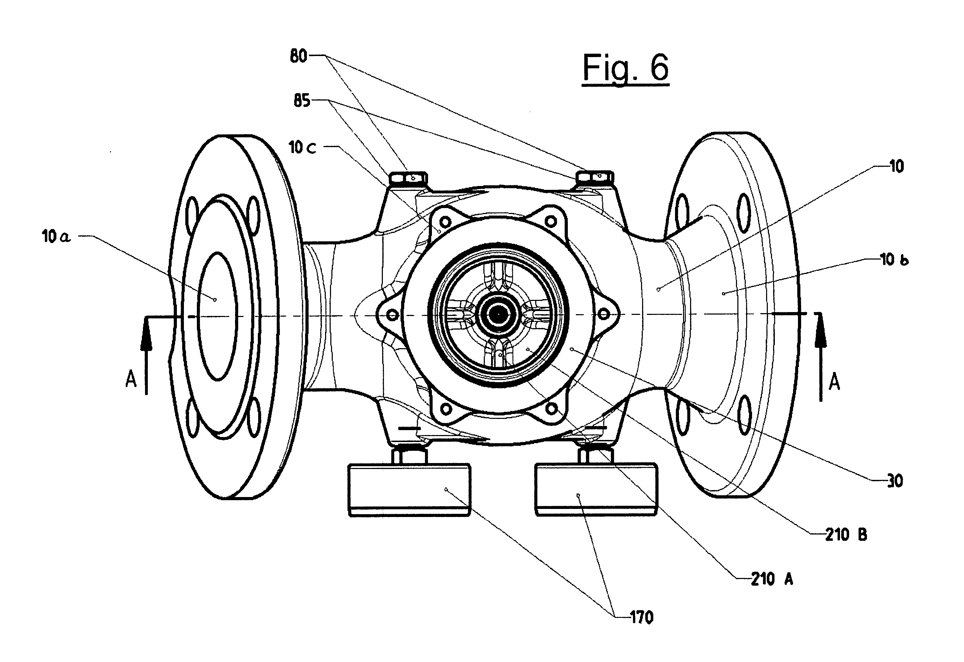

Das in den Figuren 3 bis 6 dargestellte zweite Ausführungsbeispiel für einen erfindungsgemäßen Druckminderer unterscheidet sich zunächst dadurch, dass das zweite Ausführungsbeispiel für größere Volumenströme vorgesehen ist und deshalb eine größere Nennweite hat. Bei Ventilen mit großer Nennweite werden die Anschlussstutzen in der Regel nicht als Schraubstutzen ausgebildet, sondern als Flanschstutzen, die an zuführende oder weiterführende Rohrleitungen angeflanscht werden können.

Ein besonderer Stutzen zum Anschluss eines Manometers entfällt, stattdessen sind im Gehäuse 10 des zweiten Ausführungsbeispiels Bohrungen vorgesehen, die entweder mit einem Deckel 80 verschlossen sind oder aber in die Manometer 70 eingeschraubt sind. Auch das Gehäuse 10 des zweiten Ausführungsbeispiels ist als Schrägsitzgehäuse ausgebildet, in welches die weiteren Komponenten (Ventileinsatz) des Druckminderers eingesetzt sind. Diesen weiteren Teile werden durch die Kappe 60 in dem Gehäuse 10 gehalten, wobei die Kappe im Unterschied zur Kappe 60 beim Ausführungsbeispiel nicht mit dem Gehäuse 10 verschraubt, sondern an das Gehäuse 10 mittels Schrauben 180 angeflanscht ist.

In das Gehäuse 10 ist zunächst eine Hülse 30 eingesetzt, die die gleiche Funktion wie die Hülse 30 im ersten Ausführungsbeispiel hat. Am ersten unteren Ende der Hülse 30 ist der Ventilsitz ausgebildet, wobei der Durchmesser im Bereich des Ventilsitzes genauso groß ist, wie der Durchmesser der Hülse 30 an einem gegenüberliegenden Ende, in dem Bereich, in welchem ein Ausgleichskolben 190 verschiebbar angeordnet ist.

Während beim ersten Ausführungsbeispiel der Druckausgleichskolben, ein Teil des Verbindungsmittels und die Führungsmittel aus einem Kunststoffteil 20 hergestellt sind, ist bei dem Druckminderer größerer Bauart, wie er in den Figuren 3 bis 6 dargestellt ist, eine mehrteilige Ausführung des Ausgleichskolbens 190, des Verbindungsmittels 200 und der Führungsmittel 210 vorgesehen.

Das Verbindungsmittel 200 wird durch eine Spindel gebildet, die an beiden Enden Außengewinde hat. Die Außengewinde sind einerseits in den bereits erwähnten Ausgleichskolben 190 eingeschraubt und andererseits in einen Teller 70, der zusammen mit einer Dichtungsscheibe 110 den Verschlusskolben 70, 110 des Druckminderers bildet.

Die Führungsmittel 210 weisen Flügel 210A auf, die an einer Scheibe 210B angebracht sind. Dieser Ring 210B ist auf das verschlusskolbenseitige Ende der Spindel 200 aufgesteckt und mittels des Tellers 70 mit der Spindel 200 verspannt.

Aufgrund des gleichen Durchmessers der Hülse 30 im Bereich des Ventilsitzes und im Bereich des Ausgleichskolbens 190 ist auch das zweite Ausführungsbeispiel für den Druckminderer druckausgeglichen, d. h. im geschlossenen Zustand unabhängig vom Vordruck oder von Schwankungen des Vordrucks. Im geschlossenen Zustand wirkt somit auf die Anordnung aus dem Verschlusszylinder 70, 110, der Spindel 200 und dem Ausgleichskolben 190 lediglich der Hinterdruck. Steigt dieser über ein voreingestelltes Maß an, schließt der Druckminderer. Sinkt der Hinterdruck dagegen unter den voreingestellten Druck, drückt die Druckfeder 100 die Anordnung aus dem Ausgleichskolben 190, der Spindel 200 und dem Verschlusskolben 70, 110 sowie den Führungsmitteln 210 vom Ventilsitz weg und der Druckminderer öffnet.

Der Hinterdruck, bei dem der Druckminderer öffnet oder schließt, kann durch das Verschieben des Gewindestücks 120 eingestellt werden. Das Gewindestück unterscheidet sich von dem aus dem ersten Ausführungsbeispiel bekannten Gewindestück jedoch konstruktiv. Es hat eine Gewindebohrung, in welche eine Gewindestange 220 eingeführt ist. Diese Gewindestange ist durch die Stirnseite der Kappe hindurchgeführt und mit dem Kopf 230 versehen, der Schüsselflächen zum Angriff von Schraubenschlüsseln hat. Durch ein Verdrehen des Kopfes 230 und somit der Gewindestange 220, wird das Gewindestück 220 axial verschoben, da es durch eine Madenschraube 240, die in einem Schlitz 60A geführt ist, an einem Mitdrehen gehindert ist. Die Madenschraube 240 ist geeignet, die Voreinstellung des Druckminderers anzuzeigen.

## Patentansprüche

1. Druckminderer, insbesondere für Flüssigkeitsleitungen mit einem Verschlusskolben (70,110) als Absperrorgan, mit einem Ausgleichskolben (20a, 190) als Mittel zum Druckausgleich, mit einem ein- oder mehrteiligen Verbindungsmittel (20b, 90, 200), über welches der Verschlusskolben (70, 110) und der Ausgleichskolben (20a, 190) starr miteinander verbunden sind, mit einem Ventilsitz, mit dem der Verschlusskolben (70, 110) eine Durchströmungsöffnung bestimmt, gegen den der Verschlusskolben (70, 110) bei geschlossenem Ventil abdichtet und welchen das Verbindungsmittel (20b, 90, 200) durchgreift, und mit Führungsmittel (20c, 210), die mit dem Verbindungsmittel mittelbar oder unmittelbar starr verbunden sind und in jeder Betriebsstellung einer Anordnung zumindest aus Ausgleichskolben (20a, 190), Verbindungsmittel (20b, 90, 200) und Verschlusskolben (70, 110) dieselbe führen,
**dadurch gekennzeichnet, dass** die Führungsmittel (20c, 210) im Bereich des Ventilsitzes zwischen dem Verschlusskolben (70, 110) und dem Ausgleichskolben (20a, 190) angeordnet sind.

2. Druckminderer nach Anspruch 1**, dadurch gekennzeichnet, dass** die Führungsmittel (20c, 210) radial vom Verbindungsmittel (20b, 90, 200) auskragende Flügel sind.

3. Druckminderer nach Anspruch 1 oder 2, **dadurch gekennzeichnet, dass** die Führungsmittel (20c, 210) in einer geöffneten Betriebsstellung den Ventilsitz durchgreifen.

4. Druckminderer nach einem der Ansprüche 1 bis 3, **dadurch gekennzeichnet, dass** der Ausgleichskolben (20a), Teile (20c) des Verbindungsmittels und die Führungsmittel (20c) als ein Teil (20), vorzugsweise als ein Kunststoffteil ausgebildet sind.

5. Druckminderer nach einem der Ansprüche 1 bis 3, **dadurch gekennzeichnet, dass** das Verbindungsmittel eine Spindel (200) aufweist, die in den Ausgleichskolben (190) und den Verschlusskolben (70, 110) eingeschraubt ist.

6. Druckminderer nach Anspruch 5, **dadurch gekennzeichnet, dass** die Führungsmittel (210) zwischen dem Verschlusskolben und der Spindel (200) eingespannt sind.

7. Druckminderer nach einem der Ansprüche 1 bis 6, **dadurch gekennzeichnet, dass** der Druckminderer eine Hülse (30) aufweist, in welcher die Anordnung aus dem Verschlusskolben (70, 110), den Führungsmitteln (20c, 210), dem Verbindungsmittel (20c, 90, 200) und dem Ausgleichskolben (20a, 190) angeordnet ist.

8. Druckminderer nach Anspruch 7, **dadurch gekennzeichnet, dass** an einem ersten Ende der Hülse (30) der Ventilsitz ausgebildet ist.

9. Druckminderer nach Anspruch 7 oder 8, **dadurch gekennzeichnet, dass** die Führungsmittel (20c, 210) in einem an das erste Ende angrenzenden ersten Bereich einer Innenwand der Hülse (30) geführt anliegend.

10. Druckminderer nach einem der Ansprüche 7 bis 9, **dadurch gekennzeichnet, dass** der Ausgleichskolben (20a, 190) in einem an ein zweites Ende der Hülse (30) angrenzenden zweiten Bereich der Innenwand der Hülse (30) geführt anliegt.

11. Druckminderer nach Anspruch 10, **dadurch gekennzeichnet, dass** der ersten Bereich oder der Ventilsitz einerseits und der zweite Bereich andererseits den gleichen Durchmesser haben.

12. Druckminderer nach einem der Ansprüche 7 bis 10, **dadurch gekennzeichnet, dass** die Wand der Hülse (30) in einem dritten Bereich der Wand zwischen dem ersten und dem zweiten Bereich Durchtrittsöffnungen z. B. Längsschlitze aufweist.

13. Druckminderer nach Anspruch 11, **dadurch gekennzeichnet, dass** der Druckminderer ein Gehäuse (10) aufweist, in welchem die Hülse (30) sowie der Anordnung aus dem Verschlusskolben (70, 110), den Führungsmitteln (20c, 210), dem Verbindungsmittel (20b, 90, 200) und dem Ausgleichskolben (20a, 190) angeordnet ist.

14. Druckminderer nach einem der Ansprüche 7 bis 13, **dadurch gekennzeichnet, dass** die Anordnung mittels einer Feder (100) in einer geöffnete Betriebsstellung gedrückt wird.

15. Druckminderer nach Anspruch 14, **dadurch gekennzeichnet, dass** das eine Vorspannung der Feder (100) einstellbar ist.

16. Druckminderer nach einem der Ansprüche 1 bis 15, **dadurch gekennzeichnet, dass** der Druckminderer ein Mittel zum Abweisen von Schwebstoffen aufweist, welches zustromseitig vor dem Ausgleichskolben angeordnet ist.

17. Druckminderer nach Anspruch 16, **dadurch gekennzeichnet, dass** das Mittel zum Abweisen von Schwebstoffen ein trichterförmiger Schirm ist und von dem Verbindungsmittel durchgriffen ist.

18. Druckminderer nach Anspruch 17, **dadurch gekennzeichnet, dass** der Schirm Düsen trägt.
